# EUROPÄISCHE PATENTSCHRIFT

(11) **EP 2 111 936 B1**
(45) Veröffentlichungstag und Bekanntmachung des Hinweises auf die Patenterteilung: **26.10.2011**
(21) Anmeldenummer: 09003197.2
(22) Anmeldetag: 05.03.2009
(51) Int. Cl.: B21D 43/05, B21D 43/18, B25J 15/00, B25J 15/06, B25J 19/00, F16L 37/26, F16L 37/38

(54) **Tooling-Wechselsystem**
Tooling change-over system
Système de changement d'outils

(30) Priorität: 25.04.2008 DE 102008020962
(43) Veröffentlichungstag der Anmeldung: 28.10.2009
(73) Patentinhaber: Müller Weingarten AG, 88250 Weingarten (DE)
(72) Erfinder: Müller, Christian, 88512 Mengen (DE); Speh, Peter, 88339 Bad Waldsee (DE)
(74) Vertreter: Otten, Herbert

(56) Entgegenhaltungen:
- EP-A2- 1 600 226
- DE-A1- 3 836 715
- FR-A1- 2 926 239
- US-A- 4 993 564
- US-B1- 6 182 491

## Beschreibung

Die Erfindung betrifft ein Tooling-Wechselsystem gemäß dem Oberbegriff des Patentanspruchs 1 für Teiletransportsysteme in Pressen, wie beispielsweise Pressenstraßen, Kompaktsaugerpressen und Transferpressen aller Art. Ebenso kann das erfindungsgemäße Tooling-Wechselsystem bei der Platinenzuführung und bei der Fertigteilentnahme bzw. bei der Abstapelung verwendet werden.

Solch ein Tooling-Wechselsystem ist aus der US-B-6 182 491 bekannt. Aufgabe der Erfindung ist es, ein Tooling-Wechselsystem für Werkstücktransportsysteme in Pressen zu entwickeln, welches eine einfache und insbesondere automatisierbare Auswechslung des Toolings ermöglicht.

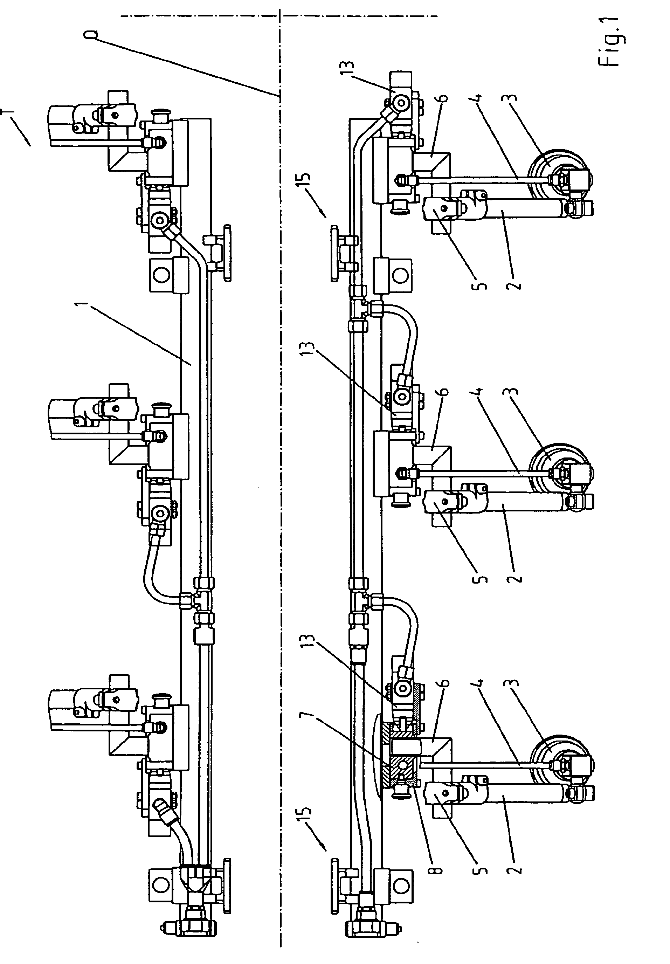

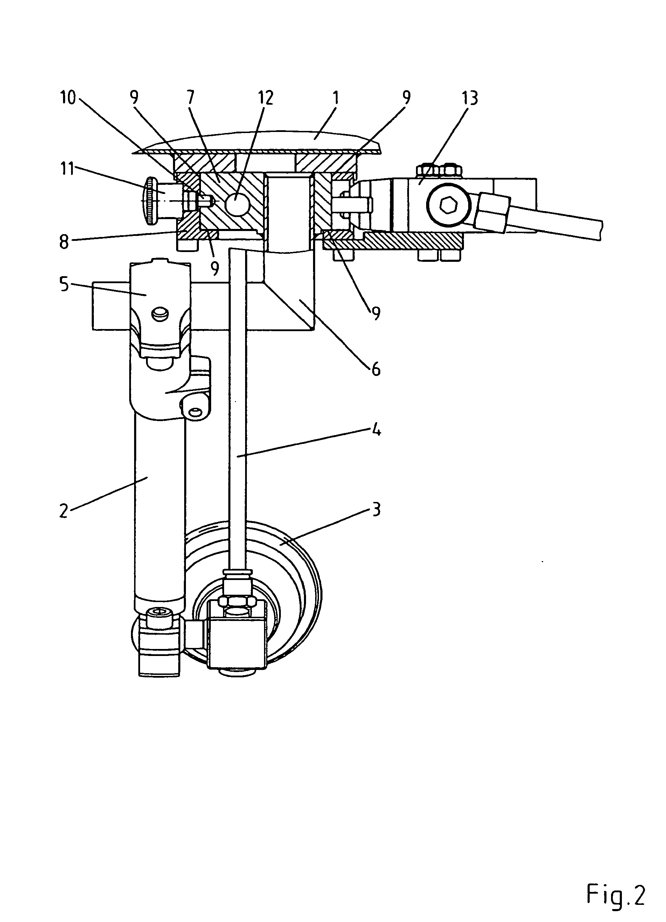

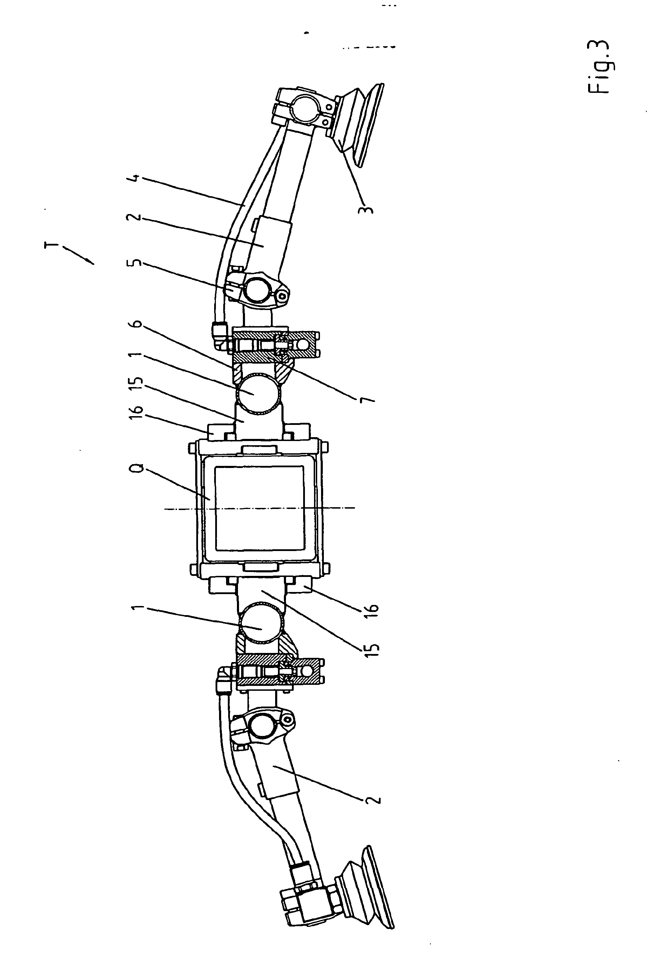

Diese Aufgabe wird gelöst mit einem Tooling-Wechselsystem gemäß den Merkmalen des Patentanspruchs 1. Das Tooling-Wechselsystem besteht aus einem Tooling-Grundträger 1 und daran austauschbar befestigte Tooling-Arme 2, wobei der Grundträger 1 an einer Quertraverse Q befestigbar ist. Die Quertraverse Q ist in der Figur 1 lediglich durch eine strichpunktierte Linie angedeutet. In einer in der Figur 3 gezeigten Schnittansicht ist die Quertravese Q körperlich dargestellt. Der Grundträge 1 ist zur Befestigung an der Quertraverse Q seinen Füßen 15 in Taschen 16 der Quertraverse Q einschiebbar. Die Figuren 1 und 3 zeigen jeweils eine Quertraverse Q, welcher ein Tooling T mit je zwei baugleichen Grundträgern 1 und Tooling-Armen 2 zugeordnet ist. An den Tooling-Armen 2 befinden sich Vakuumsauger 3 mit Pneumatikleitungen 4 zur Erzeugung eines Vakuums an den Vakuumsaugern 3. Die Tooling-Arme 2 sind mittels Klemmmechanismen 5 an Halterohren 6 befestigt. Diese wiederum sind an Kupplungspassstücken 7 befestigt. Die Kupplungspassstücke 7 und die Aufnahmen 8 bilden in eingekuppeltem Zustand eine Einheit, die eine exakte Positionierung der Tooling-Arme 2 in Bezug auf den Tooling-Grundträger 1 gewährleistet. Die Positionierung erfolgt über die Passungsflächen 9. Zur Verriegelung der Kupplungspassstücke 7 in den Aufnahmen 8 dienen Verriegelungsbolzen 10. Diese Verriegelungsbolzen 10 werden zur Verriegelung mittels der Griffe 11 formschlüssig in die Kupplungspassstücke 7 eingeführt. Zur Luft- bzw. Vakuumversorung der Vakuumsauger 3 über die Pneumatikleitungen 4 dient eine Bohrung 12 im Kupplungspassstück 7 durch die der Luftstrom, welcher von einem 3/2 Wegeventil 13 in eingekuppeltem Zustand freigegeben wird. Die Schaltung des 3/2 Wegeventil 13 erfolgt über eine Rolle mit Federrückstellung 14. Der Funktionsablauf beim Befestigen bzw. Einkuppeln eines Tooling-Armes 2 in eine Aufnahme 8 stellt sich wie folgt dar.

Zunächst wird der Verriegelungsbolzen 10 mit Hilfe des Griffes 11 zurückgezogen und damit in eine entriegelte Position gebracht. Dies kann gegen eine Federkraft erfolgen. Danach wird der Tooling-Arm 2 mit dem Halterohr 6 und dem Kupplungspassstück 7 in die Aufnahme 8 eingeführt. Dabei gleiten das Kupplungspassstück 7 und die Aufnahme 8 an den Passungsflächen 9 aneinander entlang. Während des Einführens des Kupplungspassstückes 7 in die Aufnahme 8 wird die Rolle mit Federrückstellung 14 in eine entriegelte Position des 3/2 Wegeventils 13 verdrängt und gibt dadurch einen Luftstrom frei, welcher durch die Bohrung 12 des Kupplungspassstückes 7 und durch die Pneumatikleitung 4 am Vakuumsauger 3 ein Vakuum erzeugt. Das Abkuppeln bzw. das Herausnehmen funktioniert in umgekehrter Reihenfolge.

Die Erfindung sieht auch die Möglichkeit eines vollautomatischen An- und Abkuppelns der Tooling-Arme 2 vor. Auch sind für die Verriegelung alle anderen dem Stand der Technik bekannten formschlüssigen Verbindungen oder Klemmverbindungen denkbar. Die Erfindung sieht auch andere Möglichkeiten für die Schaltung des 3/2 Wegeventils 13 vor. Alle Betätigungsmittel, welche über einen Kontakt zum Kupplungspassungsstück getätigt werden sind realisierbar.

### Bezugszeichenliste:

- 1: Tooling-Grundträger
- 2: Tooling-Arm 2
- 3: Vakuumsauger 3
- 4: Pneumatikleitung
- 5: Klemmmechanismus
- 6: Halterohr
- 7: Kupplungspassstück
- 8: Aufnahme
- 9: Passungsfläche
- 10: Verriegelungsbolzen
- 11: Griff
- 12: Bohrung in 7
- 13: 3/2 Wegeventil
- 14: Rolle mit Federrückstellung
- 15: Fuß von 1
- 16: Schuh von Q
- Q: Quertraverse
- T: Tooling

## Patentansprüche

1. Tooling-Wechselsystem für Werkstücktransportsysteme in Pressen, umfassend eine Quertraverse (Q) und ein Tooling (T), wobei das Tooling (T) aus wenigstens einem Tooling-Grundträger (1) und Tooling-Armen (2) besteht und dass die Tooling-Arme (2) einzeln auswechselbar sind, wobei der Tooling-Grundträger (1) für einen Rüstvorgang abnehmbar an der verfahrbaren Quertraverse (Q) angeordnet ist und nach einem Wechsel der Tooling-Arme (2), welcher bei abgenommenem Tooling-Grundträger (1) erfolgt, wieder an der Quertraverse (Q) fixierbar ist, wobei die Verbindung zwischen einem Tooling-Arm (2) und dem Tooling-Grundträger (1) mittels eines Kupplungspassstücks (7) realisiert wird, welches in eine Aufnahme (8) an Passungsflächen (9) entlang gleitend eingeführt wird, wobei das Kupplungspassstück (7) in der Aufnahme (8) verriegelbar ist, wobei ein Luftstrom zur Vakuumerzeugung an einem Vakuum-Sauger (3) durch mindestens eine Bohrung (12) im Kupplungsassstück (7) in eingekuppeltem Zustand hindurch geleitet wird **dadurch gekennzeichnet, dass** durch das Einführen des Kupplungspassstückes (7) in die Aufnahme (8) ein am Tooling-Grundträger (1) angeordnetes Ventil (13) betätigt wird, welches den Luftstrom zur Vakuumerzeugung freigibt.

2. Tooling-Wechselsystem nach Anspruch 1, **dadurch gekennzeichnet, dass** das Kupplungspassstück (7) mit einem Halterohr (6) fest verbunden ist, welches über einen Klemmmechanismus an dem Tooling-Arm (2) befestigt ist.

3. Tooling-Wechselsystem nach einem der vorhergehenden Ansprüche, **dadurch gekennzeichnet, dass** das
Kupplungspassstück (7) durch einen Verriegelungsbolzen (10) verriegelt wird.

## Claims

1. Tooling change-over system for workpiece transport systems in presses, comprising a crossbeam (Q) and a tooling (T), wherein the tooling (T) consists of at least one tooling base carrier (1) and tooling arms (2) and the tooling arms (2) can be replaced individually, wherein the tooling base carrier (1) is arranged detachably on the movable crossbeam (Q) for the fitting process and after the tooling arms (2) have been changed, which is performed with a removed tooling base carrier (1), it can be fixed back onto the crossbeam (Q), wherein a tooling arm (2) and the tooling base carrier (1) are connected by means of a coupling fitting piece (7), which is inserted into a mount (8) on fitting surfaces (9) in a sliding manner, wherein the coupling fitting piece (7) can be locked in the mount (8), wherein an air flow for producing a vacuum is guided to a vacuum suction device (3) through at least one bore (12) in the coupling fitting piece (7) in the coupled state, **characterised in that** by inserting the coupling fitting piece (7) into the mount (8) a valve (13) arranged on the tooling base carrier (1) is activated which releases the air flow for generating the vacuum.

2. Tooling change-over system according to claim 1, **characterised in that** the coupling fitting piece (7) is securely connected to a holding pipe (6) which is fixed by a clamping mechanism to the tooling arm (2).

3. Tooling changeover system according to one of the preceding claims, **characterised in that** the coupling fitting piece (7) is locked by a locking bolt (10).

## Revendications

1. Système de changement d'outils pour des systèmes de transport de pièces dans des presses, comprenant une traverse (Q) et un outillage (T),
* l'outillage (T) se composant d'au moins un support de base d'outillage (1) et de bras d'outillage (2), et les bras d'outillage (2) sont interchangeables individuellement,
* le support de base d'outillage (1) étant installé de manière amovible sur la traverse (Q), mobile, pour un changement d'équipement et après un changement des bras d'outillage (2) qui se fait lorsque le support de base d'outillage (1) est enlevé, celui-ci est de nouveau fixé à la traverse (Q),
* la liaison entre un bras d'outillage (2) et le support de base d'outillage (1) étant réalisée par un adaptateur de couplage (7) qui est introduit dans un logement (8) en étant glissé le long d'une surface d'adaptation (9),
* l'adaptateur de couplage (7) se verrouillant dans le logement (8),
* une veine d'air étant conduite pour créer le vide dans une ventouse (3) à travers un perçage (12) de l'adaptateur de couplage (7) à l'état accouplé,
système **caractérisé en ce qu'**
en introduisant l'adaptateur de couplage (7) dans le logement (8), on actionne une soupape (13) du support de base d'outillage (1) qui libère la veine d'air pour générer le vide.

2. Système de changement d'outillage selon la revendication 1, **caractérisé en ce que**
l'adaptateur de couplage (7) est relié solidairement à un tube de support (6) fixé par un mécanisme de serrage au bras d'outillage (2).

3. Système de changement d'outillage selon l'une des revendications précédentes,
**caractérisé en ce que**
l'adaptateur de couplage (7) est verrouillé par un goujon de verrouillage (10).
